Europäisches Patentamt

European Patent Office

Office européen des brevets

(11) Numéro de publication : **0 465 329 A2**

# (12) DEMANDE DE BREVET EUROPEEN

(21) Numéro de dépôt : **91401788.4**

(22) Date de dépôt : **01.07.91**

(51) Int. Cl.$^5$ : **B65D 65/40,** B65B 55/02, B32B 27/08, B65B 3/02, B32B 27/10, B32B 15/08, B65B 7/28, B29C 51/00, // B29L22:00

(30) Priorité : **02.07.90 FR 9008345**

(43) Date de publication de la demande : **08.01.92 Bulletin 92/02**

(84) Etats contractants désignés : **CH DE ES FR GB IT LI**

(71) Demandeur : **ERCA HOLDING**
**Zone Industrielle de Courtaboeuf Avenue du Pacifique**
**F-91942 Les Ulis Cédex (FR)**

(72) Inventeur : **Torterotot, Roland**
**Le Plessis Mornay, Longvilliers**
**F-78730 Saint-Arnoult-en-Yvelines (FR)**

(74) Mandataire : **Hasenrader, Hubert**
**Cabinet BEAU DE LOMENIE 55, rue d'Amsterdam**
**F-75008 Paris (FR)**

(54) **Bande composite en installation pour la fabrication d'emballages stériles thermoformés.**

(57)    Bande composite destinée à la fabrication d'emballages stériles thermoformés pour produits liquides et/ou pâteux, bande composite du type se composant, d'une part, d'une première bande multicouches ou monocouche dont la couche ou face dite interne destinée à délimiter l'intérieur de l'emballage est thermoplastique, thermoscellable et stérile, et, d'autre part, d'une bande de protection qui adhère de façon étanche mais pelable à la face stérile de ladite couche ou face interne.
    Selon l'invention, la bande de protection est constituée par une deuxième bande multicouches ou monocouche (102,119,146,158) de composition identique à celle de la première bande multicouches ou monocouche (2,19,46,58) et dont la couche thermoplastique interne à face intérieure stérile (108,147,159) adhère de façon étanche mais pelable à la face intérieure stérile (8,47,59) de la couche thermoplastique interne de ladite première bande multicouches ou monocouche.

FIG.2

EP 0 465 329 A2

La présente invention concerne une bande composite destinée à la fabrication d'emballages stériles thermoformés pour produits liquides et/ou pâteux, bande composite du type se composant, d'une part, d'une première bande monocouche ou multicouches dont au moins la couche dite interne destinée à délimiter l'intérieur de l'emballage est thermoplastique, thermoscellable et stérile, et, d'autre part, d'une bande de protection qui adhère de façon étanche mais pelable à la face stérile de ladite couche interne et dont la face intérieure adhérant à ladite couche interne est également stérile, la bande multicouches comprenant d'autres couches qui peuvent être soit exclusivement en différentes matières thermoplastiques, soit comprendre une feuille d'aluminium et/ou de papier adhérant de façon ferme aux autres couches, en particulier, à la couche interne thermoplastique.

Ce type de bande composite connue par exemple par le brevet suisse 621 744 présente l'inconvénient que sa bande de protection n'est pas utilisable pour la fabrication d'un emballage autre que tubulaire ou parallélépipédique et non thermoformé.

Ce problème de l'utilisation de la bande de protection a, dans un certain sens, trouvé un début de solution par une proposition faite, par exemple, dans le brevet américain 4 287 702 qui décrit une installation de conditionnement stérile d'un produit stérile dans des emballages ou récipients stériles thermoformés à partir d'une bande monocouche ou multicouches thermoplastique dite à récipients, recouverte jusqu'à son entrée dans une enceinte stérile de ladite installation par une bande de protection qui, après sa séparation de la bande multicouches thermoplastique peut servir de bande à couvercles et venir obturer les récipients thermoformés après que ceux-ci aient été remplis d'un produit stérile.

Toutefois, dans ce cas, les motifs de décoration portés par la bande de protection sont liés au produit à emballer et tout changement de produit nécessite un changement de l'ensemble de la bande composite contre une autre bande composite possédant une bande de protection qui ultérieurement devient la bande à couvercles et qui présente des motifs de décoration ou des informations écrites adaptés au nouveau produit bien que la composition de la bande monocouche ou multicouches thermoplastique à récipients soit la même que celle de la bande monocouche ou multicouches de la bande composite précédente.

Par ailleurs, dans le cas d'une bande composite de type connu, le rayon minimal d'enroulement pour son stockage sous forme de bobine est déterminé par le degré de rigidité de la bande thermoplastique à récipients alors que la bande de protection telle qu'une bande à couvercle pourrait s'enrouler avec un rayon minimal d'enroulement beaucoup plus faible en raison de sa plus faible épaisseur. En outre, lorsque l'on sépare la bande de protection de la bande multicouches thermoplastique d'une bande composite connue, les forces de séparation doivent être adaptées à la résistance mécanique de la bande la plus faible, qui dans une bande composite est souvent la bande de protection.

La présente invention a pour but d'atténuer ou de supprimer ces inconvénients.

A cette fin, il est proposé pour une bande composite du type mentionné au début que la bande de protection est constituée par une deuxième bande monocouche ou multicouches de composition identique à celle de la première bande monocouche ou multicouches et dont la couche thermoplastique interne à face intérieure stérile adhère de façon étanche mais pelable à la face intérieure stérile de la couche thermoplastique interne de ladite première bande monocouche ou multicouches.

Grâce à cette conception, on réalise une bande composite qui peut être utilisée pour les emballages stériles thermoformés et qui s'adapte mieux que jusqu'à présent aux exigences de fabrication des emballages et de la décoration desdits récipients.

La présente invention concerne aussi une installation de conditionnement stérile d'un produit liquide et/ou pâteux dans des emballages stériles tels que des récipients thermoformés réalisés par emboutissage à chaud à partir d'une bande composite présentant une bande monocouche ou multicouches thermoplastique à récipients dont la face ou couche dite interne destinée à délimiter l'intérieur de l'emballage tel que récipient est thermoscellable et stérile et est recouverte d'une bande de protection qui adhère de façon étanche, mais pelable à la face ou couche interne stérile et dont la face adhérant à ladite face ou couche interne est également stérile, récipients obturés après remplissage avec le produit par des couvercles thermoscellables réalisés à partir d'une nappe multicouches à couvercles comportant au moins une couche en matière stérile dite couche intérieure thermoscellable sur le bord des récipients thermoformés, installation du type comprenant :

– au moins une enceinte stérile présentant des parois verticales latérales et des parois supérieure et inférieure ;

– des moyens pour alimenter ladite enceinte avec un gaz stérile à une pression légèrement supérieure à celle régnant à l'extérieur de ladite enceinte ;

– des moyens pour séparer la bande monocouche ou multicouches thermoplastique à récipients de sa bande de protection à son entrée dans l'enceinte stérile ;

– des premiers moyens de transport pour déplacer ladite bande monocouche ou multicouches thermoplastique à récipients, de façon telle qu'elle forme au moins une partie de la paroi inférieure de ladite enceinte stérile ;

– des seconds moyens de transport pour déplacer ladite nappe multicouches à couvercles de façon telle qu'elle forme au moins une partie de la paroi supérieure de ladite enceinte stérile et pour l'amener jusqu'à l'extrémité aval de sortie de ladite enceinte stérile ;

– un poste de chauffage servant à chauffer la bande thermoplastique à récipients jusqu'à la température de thermoformage de celle-ci ;

– un poste de thermoformage servant à thermoformer des récipients dans ladite bande thermoplastique à récipients et comprenant, en dessous de ladite bande, au moins un moule susceptible de se déplacer verticalement entre une position haute de thermoformage et une position basse de démoulage, et, au-dessus de ladite bande, au moins un contre-moule pénétrant partiellement de haut en bas de façon étanche dans ladite enceinte stérile et présentant un poinçon de formage verticalement mobile dans une chambre de contre-moule et susceptible de pénétrer dans la chambre de formage du moule ;

– un poste de remplissage des récipients avec le produit, ce poste étant muni d'au moins une buse de distribution pénétrant de haut en bas de façon étanche dans ladite enceinte stérile et ouverte au-dessous du plan de transport de la bande multicouches thermoplastique ;

– un poste d'obturation destiné à recouvrir les récipients remplis avec la nappe multicouches à couvercles à l'extrémité aval de sortie de l'enceinte stérile de sorte que les récipients quittent ladite enceinte stérile en étant recouverts de façon étanche par ladite nappe multicouches à couvercles ;

– un poste de thermoscellement pour thermosceller la nappe multicouches à couvercles d'une façon étanche à l'air sur chacun des récipients autour de son ouverture de remplissage ;

– ainsi qu'un poste de découpage servant à découper de la bande à récipients et de la nappe à couvercles thermoscellée sur celle-ci, les récipients remplis et obturés, soit individuellement, soit par groupe de plusieurs récipients ;

– tous les éléments du poste de thermoformage à l'exception de la chambre du contre-moule et du poinçon de formage, tous les éléments du poste de remplissage à l'exception de la buse de distribution et tous les éléments du poste d'obturation et du poste de thermoscellement étant disposés en dehors de ladite enceinte stérile.

Les installations du type décrit ci-dessus peuvent utiliser soit une bande composite présentant une bande monocouche ou multicouches thermoplastique à récipients et une nappe ou bande de protection susceptible de servir ultérieurement de nappe multicouches à couvercles, soit une bande composite dont la bande monocouche ou multicouches thermoplastique est utilisée pour la fabrication des récipients et dont la bande de protection est jetée au rebut et une nappe à couvercles stérilisée sur place ou encore une nappe composite dont la nappe multicouches à couvercles sert à réaliser les couvercles stériles et dont la nappe de protection est également mis au rebut après son enlèvement de ladite nappe multicouches.

Un autre objet de l'invention vise donc une installation permettant tout au moins l'emploi d'une bande composite pour la fabrication de récipients stériles sans mise au rebut de la bande de protection qui dans ce cas devra également servir à la fabrication des récipients thermoplastiques.

Ce but est atteint du fait que l'installation comprend deux enceintes stériles alignées et juxtaposées par leurs extrémités amont de telle sorte que ces dernières sont voisines et leurs extrémités aval sont éloignées l'une de l'autre, ces deux enceintes stériles communiquant entre elles par leurs extrémités amont juxtaposées, ainsi qu'un seul poste de stockage et de déroulement d'une bobine de bande composite, disposé en dessous et entre les extrémités amont des deux enceintes stériles juxtaposées, cette bande composite présentant deux bandes monocouches ou multicouches thermoplastiques à récipients qui sont d'une composition identique et dont l'une joue pour l'autre le rôle de la bande de protection et, par sa face ou couche interne stérile, adhère de façon étanche mais pelable par traction, à la face ou couche interne stérile de l'autre bande monocouche ou multicouches thermoplastique, et que les moyens pour séparer la bande thermoplastique à récipients de sa bande de protection comportent pour les deux enceintes stériles juxtaposées une seule paire de rouleaux ou de tambours de renvoi d'axes parallèles à celui de ladite bobine de la bande composite et disposée au-dessus dudit poste de stockage entre les deux extrémités amont desdites enceintes stériles de façon à délimiter entre ses deux rouleaux ou tambours de renvoi, l'entrée commune de ces deux bandes thermoplastiques à récipients dans les deux enceintes stériles et à assurer la séparation de ladite bande composite en deux bandes thermoplastiques à récipients dont la face ou couche interne est stérile et l'envoi de chacune de ces bandes thermoplastiques dans l'enceinte stérile correspondante de façon telle que leur face stérile soit tournée vers l'intérieur de celle-ci.

Encore un autre but de l'invention vise une installation du type tel que mentionné initialement et permettant l'emploi tout au moins d'une nappe composite pour la fabrication des couvercles stériles sans rebut de la nappe de protection qui dans ce cas devra également servir à la fabrication de couvercles stériles.

Ce but est atteint du fait que l'installation comprend, en outre, des moyens pour séparer la nappe multicouches à couvercles de sa nappe de protection à son entrée dans l'enceinte stérile ainsi qu'un seul poste de déroulement d'une bobine de nappe composite, disposé au-dessus des extrémités amont des deux enceintes stériles juxtaposées, cette nappe composite présentant deux nappes multicouches à couvercles qui sont d'une composition identique et dont l'une joue pour l'autre le rôle de la bande de protection et, par sa couche intérieure stérile, adhère de façon étanche mais pelable par traction, à la couche intérieure stérile de l'autre nappe multicouches à couvercles et que les moyens pour séparer la nappe multicouches à couvercles de sa nappe de protection comportent pour les deux enceintes stériles juxtaposées une seule paire de rouleaux de renvoi d'axes parallèles à celui de la bobine et disposée en dessous dudit poste de déroulement entre les deux extrémités amont desdites enceintes stériles de façon, d'une part, à délimiter entre ses deux rouleaux de renvoi l'entrée commune de la nappe composite dans les deux enceintes stériles et, d'autre part, à assurer la séparation de celle-ci en deux nappes multicouches à couche intérieure stérile et l'envoi de chacune de ces nappes multicouches à couvercles dans l'enceinte stérile correspondante.

D'autres caractéristiques et avantages de l'invention ressortiront de la description suivante de plusieurs modes de réalisation indiqués à titre d'exemples non limitatifs.

Sur le dessin annexé:
– la figure 1 représente schématiquement une vue partielle en élévation d'une coupe verticale transversale à travers une bande composite de type connu ;
– la figure 2 représente schématiquement une coupe verticale transversale à travers un premier mode de réalisation d'une bande composite comportant deux bandes multicouches disposées conformément à l'invention ;
– la figure 3 représente schématiquement une coupe verticale transversale à travers un deuxième mode de réalisation d'une bande composite comportant deux bandes multicouches disposées conformément à l'invention ;
– la figure 4 représente schématiquement une coupe verticale transversale à travers le premier mode de réalisation, les deux bandes multicouches se trouvant à l'état déployé avec leurs couches internes situées dans un même plan horizontal et l'un des bords de chaque bande multicouches étant joint à l'un des bords de l'autre bande ;
– la figure 5 représente schématiquement une coupe verticale transversale à travers le deuxième mode de réalisation, les deux bandes multicouches se trouvant à l'état déployé avec leurs couches internes situées dans un même plan horizontal et l'un des bords de chaque bande multicouche étant joint au bord de l'autre bande de telle sorte que le plan médian passant par les bords jointifs est perpendiculaire au plan commun des parties déployées des deux bandes multicouches ;
– la figure 6 est une vue schématique en élévation d'une coupe longitudinale verticale à travers une installation de conditionnement stérile conforme à l'invention ; et,
– la figure 7 montre schématiquement une vue en perspective de certains moyens de déploiement d'une bande composite pour amener les deux bandes multicouches dans un même plan et maintenir lesdites deux bandes jointives par l'un de leurs bords.

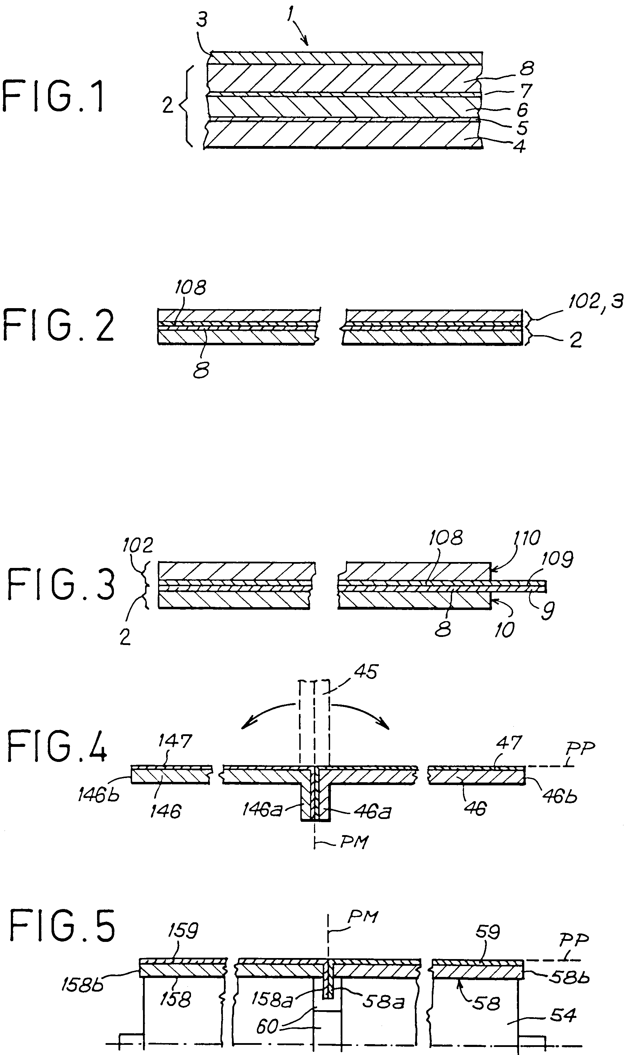

La bande composite de type connu 1 telle que représentée sur la figure 1 comprend de bas en haut une bande multicouches 2 et une bande de protection 3. La bande multicouches connue 2 comporte par exemple de bas en haut, c'est-à-dire de l'extérieur vers l'intérieur de l'emballage tel qu'un récipient, une couche de polystyrène 4, une couche d'adhésive 5, le cas échéant, une couche barrière 6 en PVDC, c'est-à-dire en poly (chlorure de vinylidène), une autre couche d'adhésive 7 et une couche de polypropylène 8.

La bande de protection 3 est, par exemple, en polyéthylène ; elle adhère de façon étanche mais pelable par traction sur la couche interne 8 (ici en polypropylène) de la bande multicouches 2 qui dans l'exemple indiqué est thermoplastique et sert à la fabrication de récipients thermoformés.

Bien entendu, la structure de la bande multicouches 2 peut être différente de celle qui vient d'être décrite sans que l'on sorte pour cela du cadre de la présente invention.

Pour éviter une confusion entre le terme "bande multicouches thermoplastique" servant à désigner des éléments destinés au thermoformage des récipients et des éléments destinés à couvrir l'ouverture des récipients et à être thermoscellés sur le bord des récipients, bord entourant ladite ouverture et pour faciliter la description ultérieure, notamment de l'installation de conditionnement, on désignera par la suite ces éléments de couverture par le terme "nappe multicouches" et l'ensemble constitué par une nappe multicouches et une nappe de protection par le terme "nappe composite" lorsque ces éléments doivent servir de couvercles. Bien entendu, aussi bien les éléments désignés par le terme "bande" que ceux désignés par le terme "nappe" ont la forme générale d'une bande et les revendications annexées visant une bande concernent, si cela n'est pas spécifié autrement aussi bien les éléments en forme de bande servant à la fabrication des récipients thermoplastiques que les éléments en forme de "nappe" servant à la fabrication des couvercles pour ces récipients.

Il convient de noter que l'invention concerne aussi toute bande composite dite à récipients dont les deux bandes constitutives thermoplastiques ne sont pas de type multicouches mais de type à couche unique thermoscellable et pelable. En effet, chacune des deux bandes constitutives et individuelles de la bande composite dite à récipients et servant effectivement à la fabrication de récipients thermoformés peut être en une couche d'un mélange de plusieurs matières thermoplastiques avec des pourcentages déterminés éventuellement munies de charges non thermoplastiques, telles que des poudres inertes qui n'empêchent ni le thermoformage, ni le thermoscellement des récipients. Ces couches de mélange de plusieurs matières thermoplastiques sont généralement connues sous le terme anglais "compound" pour les distinguer des bandes multicouches également connues sous le terme anglais "laminate". Parmi les matières thermoplastiques entrant dans la composition de la bande à couche unique également désignée par le terme "bande monocouche", on utilisera avantageusement un polyoléfine, et plus particulièrement, du polyéthylène greffé en une quantité suffisante pour que la bande monocouche soit thermoscellable. Bien entendu, la face interne de la bande monocouche est stérile et adhère de façon pelable à sa bande de protection 3.

Lorsque la bande multicouches est destinée à servir à la fabrication des couvercles, elle n'est pas constituée, en général, exclusivement de couches en matière thermoplastique mais comprend soit une couche ou feuille d'aluminium ou une couche ou feuille de papier adhérant de façon ferme à la couche thermoplastique thermoscellable 8 dite couche "intérieure" lorsqu'il s'agit d'une nappe multicouches et couche "interne" lorsqu'il s'agit d'une bande multicouches, ceci pour indiquer que cette couche 8 est tournée vers et située du côté intérieur du récipient rempli et obturé.

Il importe dans le cadre de la présente invention que la couche interne ou intérieure 8 de la bande ou nappe multicouches 2 soit une couche stérile thermoplastique et thermoscellable et puisse être séparée de la bande ou nappe de protection 3 par simple pelage sous l'action d'un effort de traction exercé sur celle-ci.

L'invention propose une bande ou nappe composite 1 dans laquelle la bande ou nappe de protection 3 est constituée par une deuxième bande ou nappe multicouches 102 de composition identique à celle de la première bande ou nappe multicouches 2. Dans ce cas, les deux bandes ou nappes multicouches 2,102 sont superposées de telle sorte qu'elles adhèrent l'une à l'autre de façon étanche mais pelable par leurs couches internes ou intérieures stériles et voisines 8 et 108 (voir figures 2 et 3).

Comme on peut le voir sur la figure 3, la bande ou nappe composite 1 comprend pour chaque bande ou nappe multicouches 2,102, une couche interne ou intérieure 8,108 qui est prolongée latéralement au moins d'un côté de la bande ou nappe composite 1 de façon à former une languette de préhension 9,109 qui dépasse des arêtes latérales ou chants superposés 10,110 de toutes les autres couches de la bande ou nappe multicouches correspondantes 2,102 d'une distance suffisante pour pouvoir être saisie ensemble avec la languette de préhension 109,9 de l'autre (deuxième) bande ou nappe multicouches 102,2 par des organes de guidage et de pression non représentés, maintenant ensemble lesdites languettes 9,109 pendant et après le déploiement, c'est-à-dire la séparation l'une de l'autre des deux bandes ou nappes multicouches 2,102 à l'exception des languettes de préhension 9,109, ce déploiement ou cette séparation étant réalisé dans un environnement stérile tout au moins en face des couches internes ou intérieures 8 et 108 afin de préserver la stérilité de celles-ci. La largeur des languettes de préhension 9,109 peut être de l'ordre de 1 centimètre à plusieurs centimètres et est déterminée en fonction de la profondeur des rails de guidage et de l'épaisseur de la bande multicouches, et aussi en fonction des organes de pression tels que des pinces portées par exemple, par une chaîne sans fin de transport.

La couche interne 8,108 de chaque bande ou nappe multicouches 2,102 peut être constituée par un polyoléfine qui est avantageusement un polyéthylène greffé thermoscellable. Il est à noter que les deux couches internes 8,108 peuvent être rendues pelables lors de la fabrication de la bande ou nappe composite 1. A cet effet, on extrude simultanément mais séparément les deux bandes multicouches et on les superpose ensuite peu de temps après mais suffisant pour que les surfaces à joindre des deux couches internes ou intérieures aient pu refroidir de quelques dizaines de degrés afin d'éviter une trop forte adhésion de l'une à l'autre et de garantir leur aptitude au pelage. Bien entendu, la température des couches internes ou intérieures 8,108 au moment de leur jonction doit être encore suffisamment élevée pour éviter toute pollution de leur surface et pour maintenir celle-ci stérile. Il est à remarquer que grâce à la haute température d'extrusion des deux bandes multicouches 8,108 superposées et écartées d'une certaine distance au moment de leur extrusion, l'air ou le gaz compris dans l'intervalle entre les deux bandes avant leur jonction est chaud et stérile et s'échappe à la rigueur vers l'extérieur de cet intervalle en empêchant ainsi toute pénétration de bactéries ou autre pollution dans cet intervalle. Cette manière de procéder pour joindre deux couches constituées de la même matière thermoplastique est connue et ne sera donc pas décrite en détail.

Selon une variante, la bande ou nappe composite peut comporter, en plus, un film intermédiaire de cire siliconé ou autre matière similaire qui est également stérile et est interposé entre les deux couches internes ou intérieures 8 et 108 des bandes ou nappes multicouches superposées 2,102. La constitution du film intermédiaire est telle que lors du pelage il reste attaché soit entièrement à l'une ou à l'autre couche interne (108), soit partiellement à l'une (8) et à l'autre desdites deux couches internes 8,108 et s'écarte de la surface de celle-ci sous l'effet d'une pression qui y est appliquée lors de l'opération de thermoscellage d'un couvercle ou d'une nappe à couvercles sur les bords des récipients thermoformés.

Dans certains cas, il peut être avantageux de thermosceller l'une sur l'autre les deux bandes ou nappes multicouches ou bandes individuelles "compound" le long de l'un de leur bord afin de faciliter le maintien en position jointive de ces deux bandes à l'endroit de ce bord lors du déploiement des deux bandes (voir figures 4 et 5). Lorsque les bandes multicouches ou monocouches individuelles ont des languettes de préhension 9,109, le thermoscellement de ces deux bandes 2,102 sera fait de préférence à l'endroit desdites languettes 9,109.

La bande composite 1 est utilisée avantageusement dans une installation de conditionnement stérile d'un produit liquide et/ou pâteux dans des emballages stériles 11, tels que des récipients thermoformés réalisés à partir d'une bande composite 1, et plus précisément dit à partir de l'une (2 ou 102) des bandes thermoplastiques multicouches ou monocouches individuelles "compound" 2,102 de celle-ci (1) par emboutissage à chaud de ladite bande thermoplastique 2,102. Cette bande composite 1 peut aussi être utilisée dans le cadre de l'installation de conditionnement stérile pourformer les couvercles qui sont thermoscellés sur le bord entourant l'ouverture supérieure des récipients 11.

Comme précédemment mentionné, pour faciliter la distinction entre les bandes destinées au thermoformage des récipients et celles destinées à former les couvercles, on désignera les premières par le terme de "bande multicouches" ou "bande monocouche individuelle" et les secondes par le terme "nappe multicouches" étant entendu que ces dernières sont toujours à couches multiples. Il est à remarquer que cette distinction n'a aucune incidence sur l'idée inventive sur laquelle se base l'objet de la présente invention dès que la bande monocouche ou multicouches ou la nappe multicouches présente une face interne ou intérieure stérile pelable et que cette bande ou nappe fait partie d'une bande ou nappe composite 1 et est thermoscellable à tout instant en particulier sur le couvercle ou sur le bord d'un récipient thermoplastique.

Une installation de conditionnement stérile 12 qui fait partie de l'état de la technique (voir brevet US-A 4 287 702) et à laquelle on propose d'apporter des perfectionnements conformes à l'invention comprend :

– une enceinte stérile 13,113 présentant des parois verticales latérales 14,114 et des parois supérieure 15,115 et inférieure 16 ;
– des moyens 17,117 pour alimenter ladite enceinte 13 avec un gaz stérile à une pression légèrement supérieure à celle régnant à l'extérieur de l'enceinte 13,113 ; et
– des moyens pour séparer une bande thermoplastique à récipients 2 de sa bande de protection 102 à son entrée 18 dans l'enceinte stérile 13,113. La bande thermoplastique à récipients 2,102 peut être une bande multicouches ou une bande monocouche individuelle du type "compound". Selon l'invention, la bande de protection 102 est constituée par une bande de structure et de composition identique que la bande thermoplastique à récipients 2 et sert également au thermoformage des récipients stériles 11,111.

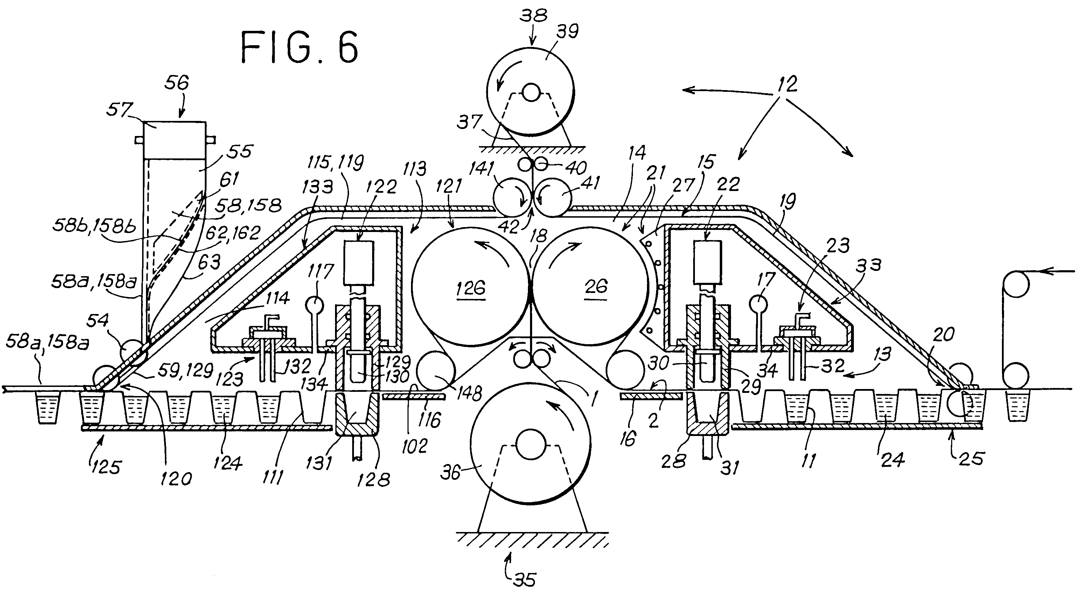

L'installation comprend aussi des premiers moyens de transport (connus par exemple par le brevet US-A-3,653,175) pour déplacer pas à pas la bande thermoplastique à récipients (en multicouches ou monocouche) 2,102 de façon telle qu'elle forme au moins en partie la paroi inférieure de l'enceinte stérile 13,113 ainsi que des seconds moyens de transport connus, d'une part, pour déplacer une nappe multicouches à couvercles 19,119 de façon telle que cette nappe 19,119 forme au moins une partie de la paroi supérieure de l'enceinte stérile correspondante 13,113 et, d'autre part, pour l'amener jusqu'à l'extrémité aval de sortie 20,120 de ladite enceinte stérile 13,113. Egalement de façon connue, l'installation comprend aussi un poste de chauffage 21,121 servant à chauffer la bande thermoplastique à récipients (multicouches ou monocouches) 2,102 jusqu'à la température de ramollissement ou de thermoformage, un poste de thermoformage 22,122 servant à thermoformer des récipients 11,111 dans la bande thermoplastique 2,102 un poste de remplissage 23,123 servant à remplir ces récipients thermoformés 11,111 avec un produit 24,124, un poste d'obturation 25,125 un poste de thermoscellement et un poste de découpage, tous deux non représentés et situés comme le poste d'obturation en dehors de l'enceinte stérile 13,113. Le poste de chauffage 21,121 comprend dans l'exemple représenté à la figure 6, un tambour de chauffage 26,126 qui est situé à l'extérieur de l'enceinte 13,113 et qui remplit ici également la fonction d'un rouleau de renvoi pour la bande thermoplastique 2,102 entourant partiellement le pourtour de ce dernier. Le poste de chauffage 21,121 peut également ou seulement comprendre une boîte de chauffe 27 (voir côté droit de la figure 6) disposée à l'intérieur de l'enceinte stérile 13,113 vis-à-vis d'une partie de la face interne de la bande thermoplastique 2,102, face interne qui formera ultérieurement le côté intérieur des récipients 11,111. Le poste de thermoformage 22,122 comprend en dessous du trajet de la bande thermoplastique 2,102 au moins un moule ou un bloc de moule 28,128 susceptible de se déplacer entre une position haute de thermoformage et une position basse de démoulage des récipients 11,111 et, au-dessus de ladite bande 2,102, au moins un contre-moule 29,129 pénétrant partiellement de haut en bas de façon étanche dans l'enceinte stérile 13,113 et présentant un poinçon de formage 30,130 verticalement mobile dans une chambre de contre-moule 29,129 et susceptible de pénétrer dans la chambre de formage 31,131 du moule 28,128. Le poste de remplissage 23,123 qui, pris dans le sens de déplacement de la bande thermoplastique 2,102 se trouve en aval du poste de thermoformage 22,122 est muni d'au moins une buse de distribution 32,132 pénétrant de haut en bas de façon étanche dans l'enceinte stérile 13,113 et ouverte au-dessus du plan ou trajet de transport de la bande thermoplastique 2,102. Le poste d'obturation 25,125 sert à revouvrir les récipients 11,111 remplis du produit stérile 24,124 et encore attachés à la bande thermoplastique 2,102 avec la nappe à couvercles 19,119 juste à la sortie 20,120 de l'enceinte stérile 13,113 de sorte que les récipients remplis 11,111 soient recouverts et obturés de façon étanche vis-à-vis de l'atmosphère extérieure tout au moins aux bords de la bande thermoplastique avant qu'ils quittent entièrement ladite enceinte stérile 13,113. Le poste de thermoscellement non représenté et prévu en aval du poste d'obturation 25,125 est de structure classique et sert à thermosceller de façon étanche le couvercle sur le bord de chacun des récipients, bord entourant l'ouverture de ceux-ci. Le poste de découpage disposé en aval du poste de scellement est également de structure connue et sert à découper de la bande à récipients et de la nappe à couvercles thermoscellée à ladite bande à récipients, les récipients remplis et recouverts d'un couvercle, soit individuellement, soit par groupe de plusieurs récipients.

Il est encore à noter que tous les éléments du poste de thermoformage 22,122 à l'exception de la chambre du contre-moule 29,129 et du poinçon de formage 30,130 tous les éléments du poste de remplissage 23,123 à l'exception de la buse de distribution 32,132 et tous les éléments du poste d'obturation 25,125 et des postes de scellement et de découpage sont disposés en dehors de l'enceinte stérile 13,113. Comme on peut le voir sur la figure 6, l'enceinte 13,113 est traversée par un tunnel 33,133 disposé à une faible distance au-dessus du trajet de la bande thermoplastique 2,102 et raccordé de façon étanche aux parois latérales verticales 14,114 de l'enceinte stérile 13,113. La paroi inférieure 34,134 du tunnel transversal 33,133 est parallèle au trajet de la bande thermoplastique 2,102 et supporte les éléments du contre-moule 29,129 du poste de formage 22,122 et ceux du poste de remplissage 23,123 quine sont pas disposés à l'intérieur de l'enceinte stérile 13,113.

La structure de l'installation qui vient d'être décrite est connue par exemple par le brevet US-A 4 287 702 qui révèle encore d'autres modes de réalisation.

L'ensemble de ces modes de réalisation peut être utilisé dans le cadre de la présente invention.

Pour éviter une description trop longue dans le cadre présent, le contenu du brevet US-A 4 287 702 et de ses brevets correspondants est considéré comme faisant partie intégrante de la présente description.

Selon un premier mode de réalisation, l'installation comprend deux enceintes stériles 13,113 par exemple du type précédemment décrit. Ces deux enceintes 13,113 sont alignées et juxtaposées par leurs extrémités amont de telle sorte que, d'une part, ces dernières sont voisines et délimitent une entrée commune 18 pour une seule bande composite 1 et les deux bandes thermoplastiques 2 et 102 qui résultent du pelage de ladite bande composite 1, c'est-à-dire de l'une des bandes 2,102 de l'autre et, d'autre part, leurs extrémités aval, c'est-à-dire leurs postes d'obturation 25,125 sont éloignés l'un de l'autre de la somme des longueurs de chacune des deux enceintes 13,113 qui communiquent entre elles par leurs extrémités amont juxtaposées.

L'installation comprend, en outre, un seul poste de stockage et de déroulement 35 d'une bobine 36 de bande composite 1. Ce poste de stockage et de déroulement 35 est disposé entre les extrémités amont des deux enceintes juxtaposées 13,113 et de préférence en dessous desdites extrémités amont et plus précisément dit en dessous de l'entrée commune 18 dans ces deux enceintes 13,113. Comme précédemment mentionné, la bande composite 1 présente deux bandes monocouches ou multicouches thermoplastiques 2,102 qui sont d'une composition identique et dont l'une joue pour l'autre le rôle d'une bande de protection à l'extérieur de l'enceinte ou des enceintes stériles 13,113 et, par sa couche ou face interne stérile, adhère de façon étanche mais pelable par traction, à la couche ou face interne stérile de l'autre bande monocouche ou multicouches thermoplastique.

Les moyens pour séparer la bande composite unique 1 en deux bandes monocouches ou multicouches thermoplastiques 2,102 dont l'une constitue en même temps la bande de protection de l'autre, comportent pour les deux enceintes stériles juxtaposées 13,113 une seule paire de rouleaux ou de tambours de renvoi 26,126 dont les axes sont parallèles à celui de la bobine 36 de la bande composite 1. Cette paire de rouleaux de renvoi 26,126 est disposée d'une part, au-dessus du poste de stockage et de déroulement 25 d'une paire de rouleaux de guidage 37 pour la bande composite 1, et, d'autre part, entre les deux extrémités amont des deux enceintes stériles 13,113 et délimite entre ses deux rouleaux ou tambours de renvoi 26,126 l'entrée commune 18 dans les deux enceintes 13,113, entrée commune 18 qu'empruntent la bande composite unique 1 et les deux bandes monocouches ou multicouches 2,102 qui résultent de la séparation de ladite bande composite 1. Chacun des rouleaux ou tambours de renvoi 26,126 peut en même temps remplir la fonction d'un appareil de chauffe pour porter la bande thermoplastique correspondante 2 ou 102 pendant que celle-ci est en contact avec lui, à la température de thermoformage, en plus de la fonction principale qui consiste d'une part à assurer la séparation de la bande composite 1 en deux bandes thermoplastiques monocouches ou multicouches 2,102 de façon que la face ou couche interne stérile desdites bandes 2,102 soit tournée vers l'intérieur de l'enceinte correspondante 13,113 et, d'autre part, à envoyer chacune de ces bandes 2,102 dans l'enceinte stérile correspondante 13,113.

Dans le cas de l'installation représentée sur la figure 6, on utilise aussi une nappe composite unique 37 qui présente deux nappes multicouches à couvercles de composition identique 19,119 dont chacune comporte une face ou couche en matière thermoplastique dite couche intérieure qui est thermoscellable sur le bord des récipients thermoformés et est recouverte par la face ou couche intérieure de l'autre nappe multicouches 119 faisant office de nappe de protection pour la première nappe multicouches 9 et vice versa et adhérant à celle-ci de façon étanche mais pelable par traction.

Cette installation comprend, en outre, un seul poste de déroulement 38 d'une bobine 39 de nappe composite 37, disposé au-dessus des extrémités amont des deux enceintes stériles juxtaposées 13,113. En dessous du poste de déroulement 38 sont prévus une paire de rouleaux de guidage 40 et des moyens pour séparer la nappe composite 37 en deux nappes multicouches 19,119 dont chacune joue pour l'autre le rôle d'une nappe de protection jusqu'à l'entrée dans l'enceinte stérile correspondante 13,113. Ces moyens de séparation comportent pour les deux enceintes juxtaposées 13,113 une seule paire de rouleaux de renvoi 41,141 d'axes parallèles à l'axe horizontal de la bobine 39 de la nappe composite unique 37 et disposée en dessous de la paire de rouleaux de guidage 40 et du poste de déroulement 38 et entre les extrémités amont desdites deux enceintes stériles 13,113 de façon à délimiter entre ses deux rouleaux de renvoi une deuxième entrée commune 42 dans lesdites enceintes 13,113. Cette deuxième entrée commune 42 constituée par la fente de passage entre les deux rouleaux de renvoi 41,141 est empruntée par la nappe composite unique 37 qui au niveau de cette fente de passage est séparée en deux nappes multicouches à couvercles 19,119 dont la couche intérieure stérile tournée vers l'intérieur de l'enceinte correspondante 13 ou 113 constitue au moins une partie, et dans le cas représenté sur la figure 6 toute la paroi supérieure 15,115 de l'enceinte stérile 13,113. Dans ce cas aussi, les deux rouleaux de renvoi 41,141 ont pour fonction d'assurer, d'une part, la séparation de la nappe composite unique 37 en deux nappes multicouches 19,119 et, d'autre part, l'envoi de chacune de celles-ci dans l'enceinte stérile correspondante 13 ou 113.

Les moyens de transport pour déplacer pas à pas les nappes multicouches 19,119 sont de conception connue et comprennent par exemple une pluralité de pinces de préhension saisissant les bords desdites nappes et portées par des chaines sans fin de transport.

Comme on peut le voir sur la figure 6, le poste de stockage 35 de la bobine 36 de la bande composite 1 se trouve en dessous du poste de déroulement 38 de la nappe composite 37. En outre, la paire de rouleaux de renvoi 26,126 pour séparer la bande composite 1 en deux bandes multicouches ou monocouches 2,102 et l'entrée commune 18 de ladite bande composite 1 et desdites bandes 2,102 sont disposées en dessous et à l'aplomb de la paire de rouleaux de renvoi 41,141 pour séparer la nappe composite 37 en deux nappes multicouches 19,119, de même qu'en dessous de l'entrée commune 42 de ladite nappe composite 37 et de ses deux nappes multicouches dans lesdites deux enceintes stériles 13,113.

Au lieu d'utiliser deux enceintes stériles alignées et juxtaposées par leurs extrémités amont, on peut se limiter à l'emploi d'une seule enceinte stérile, par exemple l'enceinte gauche 113 de la figure 6 à condition d'une part d'utiliser une bande composite 1 susceptible d'être déployée en deux bandes monocouches ou multicouches telles que représentées par les figures 4 et 5 et, d'autre part, d'apporter à cette enceinte 113 quelques modifications décrites ci-après.

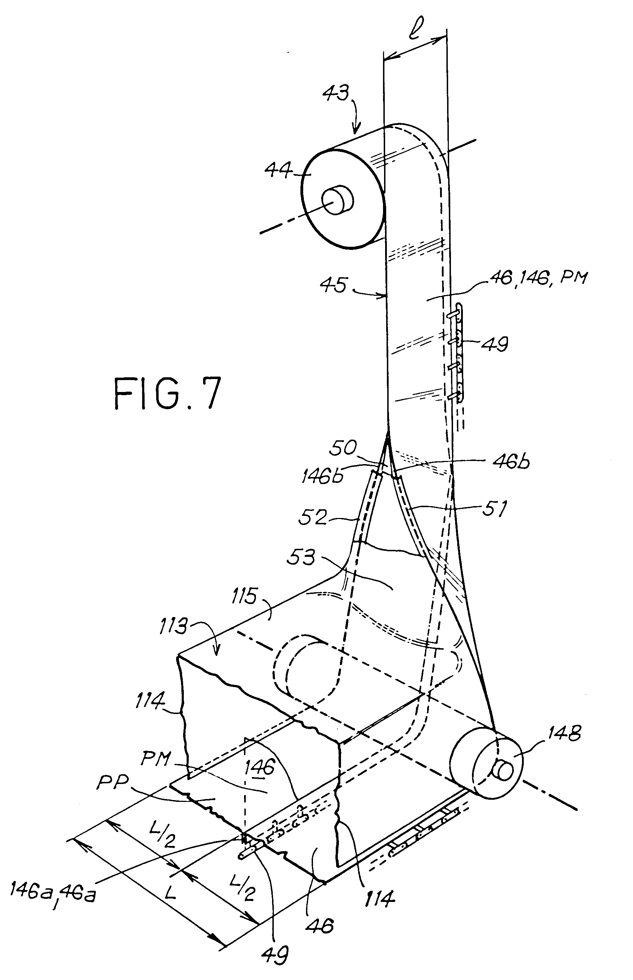

Dans ce cas, partiellement représenté sur la figure 7, on utilise un poste de stockage et de déroulement 43 pour une bobine 44 d'une bande thermoplastique composite unique 45 qui comprend deux bandes thermoplastiques monocouches ou multicouches 46 et 146 qui sont d'une composition identique et dont l'une (46 ou 146) joue pour l'autre (146 ou 46) le rôle d'une bande de protection et, par sa face ou couche interne stérile 47,147, adhère de façon étanche mais pelable par traction, à la face ou couche interne stérile 147,47 de l'autre bande monocouche ou multicouches thermoplastique (146 ou 46). En outre, la bande composite 45 (et aussi la bobine 44) a une largeur I supérieure de un à plusieurs centimètres à la moitié de la largeur L des deux bandes monocouches ou multicouches 46,146 juxtaposées et rabattues, à partir du plan médian PM de la bande composite 45 dans un plan PP qui, d'une part, est perpendiculaire au plan médian PM passant également entre les deux bords longitudinaux jointifs 46a et 146a desdites deux bandes rabattues 46,146, et, d'autre part, contient la face ou couche libre interne stérile 47,147 de chacune desdites deux bandes 46,146.

Comme on peut le voir sur la figure 7, l'arbre ou l'axe de la bobine 44 est disposé horizontalement et perpendiculairement à l'arbre ou axe horizontal du rouleau de renvoi 148 situé à proximité et en amont du poste de thermoformage 122. Cette disposition permet de placer un tronçon de la bande composite 45 dans un plan qui coïncide avec le plan médian PM des bords longitudinaux jointifs 46a,146a des deux bandes thermoplastiques 46,146 après le déploiement de celles-ci autour desdits bords jointifs 46a,146a dans le plan PP dans lequel les faces internes stériles desdites deux bandes sont alignées et juxtaposées à l'exception des parties fermées par les bords jointifs 46a,146a (voir figures 4,5 et 7).

Selon les figures 4 et 7, les deux bandes monocouches ou multicouches 47,147 ont été rabattues à partir du plan médian PM de la bande composite 45 de 90 degrés, l'une dans le sens des aiguilles d'une montre et l'autre dans le sens contraire afin d'amener les faces internes stériles en alignement dans le même plan PP perpendiculaire au plan médian PM et ceci tout en conservant aux bords jointifs 46a et 146a leur position initiale. Il est également possible d'aboutir au même résultat en conservant à l'une des bandes monocouche ou multicouches 46,146 sa position initiale et à rabattre l'autre bande de 180 degrés et les deux bords jointifs 46a,146a de 90 degrés par rapport au plan médian de la bande composite 45.

Pour maintenir serrés et jointifs les bords 46a et 146a des deux bandes 46,146 de la bande composite 45 pendant le déploiement et rabattement du reste de ces deux bandes 46,146 dans le plan PP, on prévoit dans l'installation des moyens 49 qui permettent de maintenir serrées l'une contre l'autre les deux bandes monocouche ou multicouches 46,146 de la bande composite 45 le long de l'un de ses bords longitudinaux, c'est-à-dire du côté du bord opposé à celui à partir duquel s'opère le déploiement desdites deux 46,146, ces moyens 49 constitués, par exemple, par des pinces portées par une chaîne sans fin animée d'un mouvement pas à pas, sont prévus à l'extérieur de l'enceinte stérile 113 à partir d'un endroit situé en amont du poste de chauffage et de l'entrée dans l'enceinte stérile et s'étendent jusqu'au moins en aval du poste de thermoscellement.

Il se peut que notamment sur des trajets courbes des deux bandes juxtaposées 46,146, il se produit des faibles fuites de gaz ou d'air stérile au niveau des bords jointifs 46a,146a. Toutefois, ceci n'a pas d'influence néfaste sur le maintien de la stérilité à l'intérieur de l'enceinte stérile 113 puisque celle-ci est alimentée en permanence avec un gaz en légère surpression par rapport à celle de la pression extérieure.

Comme on peut le voir sur la figure 7, dans le cas où l'installation de conditionnement comporte une seule enceinte stérile 113, les moyens pour séparer la bande composite 45 en deux bandes monocouche ou multicouches 46,146, ou pour séparer une bande thermoplastique monocouche ou multicouches 46 de sa bande de protection qui dans le cas présent est également une bande thermoplastique 146 de la même structure que la première bande thermoplastique 46, présentent, à l'opposé des moyens 49 pour maintenir serrées l'une contre l'autre les deux bandes monocouches ou multicouches 46,146 de la bande composite 45 le long de l'un des bords de celle-ci, et à l'entrée dans l'enceinte stérile 113, un coin d'écartement 50 et deux glissières de guidage 51,52 dont chacune guide, de façon étanche à l'air extérieur, celui 46b,146b des bords 46a,46b, 146a,146b des deux bandes monocouche ou multicouches 46,146 qui se trouve à l'opposé du bord de la bande composite 45 à l'endroit duquel les bords superposés 46a,146a des deux bandes mono ou multicouches 46,146 sont maintenus jointifs et serrés l'un contre l'autre.

Les deux glissières de guidage 51,52 sont presque jointives à la pointe amont du coin d'écartement 50 qui est conformé de façon à ouvrir progressivement la bande composite 45 de sorte qu'un point du bord de l'une des deux bandes mono ou multicouches suit, lors du déplacement de la bande, une courbe elliptique (par exemple sur un angle de 90 degrés) qui est déterminée par l'intersection entre, d'une part, la surface d'un cylindre droit dont l'axe est la droite de jonction des deux bords jointifs 46a,146a et, d'autre part, un plan incliné à partir de l'autre bord 46b,146b, dans le sens de l'avancement de la bande composite 45 et coupant cet axe sous un angle de 30 à 75°. Les deux glissières de guidage 51,52 s'écartent progressivement l'une de l'autre à partir de la pointe amont du coin d'écartement 50, tout en gardant toujours, pour un point donné d'un bord 46b ou 146b d'une bande 46 ou 146, la même distance par rapport aux bords jointifs 46a,146a desdites bandes mono ou multicouches 46,146 jusqu'à ce qu'elles joignent les parois latérales verticales 114 de l'enceinte stérile 113 juste en amont du rouleau de renvoi 148 à partir duquel les deux bandes juxtaposées jointives 46,146 avancent dans un plan horizontal en direction du poste de thermoformage 122 et constituent la paroi inférieure de l'enceinte stérile. A la jonction avec les parois latérales 114 de l'enceinte stérile 113, les deux glissières 51,52 se trouvent écartées l'une de l'autre d'une distance maximale correspondant à la largeur maximale L des deux bandes mono ou multicouches 46,146 juxtaposées et déployées dans un même plan (ici vertical puis horizontal en aval du rouleau 148) PP qui est perpendiculaire au plan médian PM des bords jointifs 46a,146a desdites bandes 46,146.

A partir de l'extrémité amont des deux glissières 51,52, c'est-à-dire à partir de l'endroit où débute la séparation de la bande composite 45 en deux bandes mono ou multicouches 46,146 jusqu'à l'endroit où lesdites deux bandes 46,146 se trouvent déployées dans un même plan (ici vertical en amont du rouleau 148) et où chacune des deux glissières 51,52 se raccorde à la paroi latérale verticale correspondante 114 de l'enceinte 113, les deux glissières 51,52 sont reliées entre elles par une paroi bombée de couverture 53 qui recouvre les faces ou couches internes 47,147 des bandes mono ou multicouches 46,146 et qui se raccorde aussi progressivement au-dessus du rouleau de renvoi 148 à la paroi supérieure 115 de l'enceinte 113. Il est à noter que dans le cas d'une enceinte unique, la nappe à couvercles est introduite dans l'enceinte seulement peu en amont du poste de couverture 125 par exemple à l'endroit indiqué par la référence 54 sur l'enceinte gauche 113 de la figure 6.

La nappe stérile à couvercles à utiliser en combinaison avec une enceinte stérile 113 peut être du type classique, mais est de préférence une nappe à couvercles constituée à partir d'une nappe composite 55 et présentant une structure telle qu'indiquée schématiquement sur les figures 4 et 5.

Dans ce cas, on prévoit à l'extérieur de l'enceinte 113 un poste de support et de déroulement 56 pour une bobine 57 de nappe composite 55, ce poste 56 étant identique ou similaire à celui (43) représenté à la figure 7. Comme précédemment mentionné, la nappe composite 55 comprend alors deux nappes multicouches à couvercles 58,158 identiques ou similaires à celles représentées sur les figures 4 et 5 et de composition et de structure identiques l'une de l'autre. L'une de ces nappes 58,158 joue pour l'autre, pendant le stockage de la nappe composite 55, c'est-à-dire avant l'utilisation de celle-ci, le rôle de la nappe de protection et, par sa couche intérieure stérile 59, adhère de façon étanche mais pelable par traction, à la couche intérieure stérile 159 de l'autre nappe multicouches 158. Egalement comme indiqué sur la figure 7, la largeur 1 de la nappe composite 55 est supérieure de un à plusieurs centimètres à la moitié de la largeur maximale L des deux nappes multicouches juxtaposées 58,158 lorsque celles-ci sont rabattues dans un même plan PP qui est perpendiculaire au plan médian PM passant entre les deux bords longitudinaux jointifs 58a,158a des deux nappes 58,158 et qui contient les faces libres de la couche intérieure stérile 59,159 de chacune desdites deux nappes 58,158.

Les moyens pour maintenir serrées l'une contre l'autre les deux nappes multicouches 58,158 de la nappe composite 55 le long de l'un des bords de cette nappe 55 ne sont pas représentés sur le dessin, mais sont analogues à ceux (49) pour la bande composite 45 et les bandes thermoplastiques 46,146 de la figure 7 et sont, par exemple, constitués par des pinces montées à intervalle régulier sur une chaîne sans fin, ces moyens agissant sur les bords jointifs 58a,158a à partir d'un endroit situé en amont du poste d'obturation et de préférence en face de l'endroit du début de l'écartement des deux nappes multicouches 58,158 jusqu'au moins en aval du poste de thermoscellement.

Il est à remarquer qu'aussi bien les bords jointifs 46a,146a des bandes thermoplastiques à récipients 46,146 que les bords jointifs 58a,158a des nappes multicouches à couvercles 58,158 sont toujours situés à l'extérieur de l'enceinte stérile 113 tandis que leurs faces internes 47,147 ou faces intérieures 59,159 sont à l'état déployé desdites bandes et nappes toujours tournées vers l'intérieur de l'enceinte stérile 113.

Pour faire passer des bandes ou nappes déployées par dessus un rouleau de renvoi par exemple 54 sans que les bords jointifs par exemple 58a,158a soient écrasés par la surface cylindrique de ce rouleau et pour permettre aussi le passage des pinces de serrage et de leur chaîne de transport sans fin, on prévoit sur un tel rouleau de renvoi 54 une gorge annulaire 60 (voir figure 5).

Les moyens pour séparer et déployer les deux bandes multicouches 58,158 de la nappe composite à couvercles 55 sont analogues ou identiques à ceux de la bande composite thermoplastique 45 et décrits notamment en référence à la figure 7. Ces moyens de séparation comportent à l'opposé des moyens pour maintenir serrés l'un contre l'autre les bords longitudinaux 58a,158a des nappes multicouches 58,158, un coin d'écartement 61 et deux glissières de guidage 62,162 dont chacune guide de façon étanche à l'air extérieur celui (58b,158b) des bords des deux nappes 58,158 qui se trouve à l'opposé des bords superposés et maintenus jointifs 58a,158a desdites deux nappes 58,158. Les deux glissières de guidage 62,162 presque jointives à la pointe amont de l'extrémité amont du coin d'écartement 61 pour saisir le bord correspondant 58b ou 158b du début de séparation des nappes 58,158 et pour éviter une fuite trop importante du gaz stérile de l'enceinte 113, sont conformées de façon à s'écarter progressivement l'une de l'autre tout en gardant toujours la même distance par rapport aux bords jointifs 58a,158a desdites nappes multicouches 58,158 jusqu'à ce qu'elles joignent les parois latérales 114 de l'enceinte stérile et se trouvent à la distance maximale correspondant à la largeur maximale L des deux nappes multicouches 58,158 déployées dans un même plan PP perpendiculaire au plan médian PM des bords jointifs 58a,158a.

Les deux glissières 62,162 sont reliées entre elles par une paroi bombée de protection 63 disposée de façon à faire face aux couches intérieures 59,159 des deux nappes 58,158 et s'étend à partir de l'endroit de séparation initiale des deux nappes 58,158, c'est-à-dire à partir de l'extrémité amont du coin d'écartement 61, jusqu'à la jonction des glissières 62,162 avec les parois latérales verticales 114 de l'enceinte 113, cette paroi de protection 63 se raccordant également à la paroi supérieure 115 de ladite enceinte 113. Comme précédemment mentionné, les deux nappes multicouches 58,158 sont guidées, tout au moins à partir de l'endroit de leur écartement (coin 61), de telle sorte que leurs bords jointifs 58a,158a restent toujours à l'extérieur de l'enceinte stérile 113 et que leurs couches intérieures stériles 59,159 forment au moins une partie de la paroi supérieure de l'enceinte stérile 113 et viennent, au poste d'obturation 125, recouvrir de façon étanche les ouvertures des récipients thermoplastiques 111 formés dans les bandes thermoplastiques juxtaposées et déployées 46,146 (voir aussi figures 4 et 7).

L'objet de l'invention n'est pas limité aux modes de réalisation précédemment décrits, mais comprend toutes les variantes entrant dans le cadre de protection des revendications annexées.

## Revendications

1. Bande composite destinée à la fabrication d'emballages stériles thermoformés pour produits liquides et/ou pâteux, bande composite du type se composant, d'une part, d'une première bande multicouches ou monocouche dont la couche ou face dite interne destinée à délimiter l'intérieur de l'emballage est thermoplastique, thermoscellable et stérile, et, d'autre part, d'une bande de protection qui adhère de façon étanche mais pelable à la face stérile de ladite couche ou face interne et dont la face intérieure adhérant à ladite couche ou face stérile est également stérile, la bande multicouches comprenant d'autres couches qui peuvent être soit exclusivement en différentes matières thermoplastiques, soit comprendre une feuille d'aluminium et/ou une feuille de papier adhérant de façon ferme à la couche interne thermoplastique, caractérisée en ce que la bande de protection est constituée par une deuxième bande multicouches ou monocouche (102,119,146,158) de composition identique à celle de la première bande multicouches ou monocouche (2,19,46,58) et dont la couche thermoplastique interne à face intérieure stérile (108,147,159) adhère de façon étanche mais pelable à la face intérieure stérile (8,47,59) de la couche thermoplastique interne de ladite première bande multicouches ou monocouche.

2. Bande composite selon la revendication 1, caractérisée en ce que chaque couche interne (8,108 ou 59,159) de chacune des deux bandes multicouches associées (2,102 ou 58,158) est prolongée latéralement au moins d'un côté de façon à former une languette de préhension (9,109 ou 58a,158a) qui dépasse des arêtes latérales superposées (10,110) de toutes les autres couches de la bande multicouches correspondante (2,102,58,158) d'une distance suffisante pour pouvoir être saisie ensemble avec la languette de préhension de la deuxième bande multicouches par des organes de guidage et de pression (49) maintenant ensemble lesdites languettes pendant et après la séparation l'une de l'autre des deux bandes multicouches dans un environnement stérile.

3. Bande composite selon l'une des revendications 1 et 2, caractérisée en ce que chacune des deux couches internes (8,47,59,108,147,159) est constituée par un polyoléfine.

4. Bande composite selon la revendication 3, caractérisée en ce que le polyoléfine est du polyéthylène greffé thermoscellable.

5. Bande composite selon l'une des revendications 1 à 4, caractérisée en ce qu'elle comporte, en outre, un film intermédiaire de cire siliconé ou matière similaire qui est stérile et interposé entre les deux couches ou faces internes (8,47,59, 108,147,159), et dont la constitution est telle que, lors du pelage il reste attaché à l'une ou à l'autre couche ou face interne et s'écarte de la surface de celle-ci sous l'effet d'une pression qui y est appliquée lors de l'opération de thermoscellage.

6. Bande composite selon l'une des revendications 1 à 5, caractérisée en ce que chaque bande monocouche (2,19,46,58, 102,119,146,158) est constituée d'un mélange de plusieurs matières thermoplastiques.

7. Bande composite selon l'une des revendications 1 à 6, caractérisée en ce que les deux bandes monocouches ou multicouches (2,19,46,58,102, 119,146,158) sont thermoscellées l'une à l'autre le long de l'un (9,109,46a,146a,58a,158a) de leurs bords.

8. Bande composite selon la revendication 7, caractérisée en ce que les deux bandes monocouches ou multicouches (2,102 ; 58,158) sont thermoscellées l'une à l'autre à l'endroit de leurs languettes de préhension (9,109 ; 58a,158a).

9. Installation de conditionnement stérile d'un produit liquide et/ou pâteux dans des emballages stériles tels que des récipients thermoformés réalisés par emboutissage à chaud à partir d'une bande composite (11,45) présentant une bande monocouche ou multicouches thermoplastique dont la couche ou face dite interne destinée à délimiter l'intérieur de l'emballage tel que récipient (11,111) est thermoscellable et stérile et est recouverte d'une bande de protection qui adhère de façon étanche, mais pelable à la face interne stérile de ladite bande thermoplastique et dont la face adhérant à celle-ci est également stérile, récipients obturés après remplissage avec le produit par des couvercles thermoscellables réalisés à partir d'une nappe multicouches à couvercles (19,119) comportant au moins une couche en matière stérile dite couche intérieure thermoscellable sur le bord des récipients thermoformés, installation du type comprenant :

– au moins une enceinte stérile (13,113) présentant des parois verticales latérales (14,114) et des parois supérieure (15,115) et inférieure (16,116) ;

– des moyens (17,117) pour alimenter ladite enceinte (13,113) avec un gaz stérile à une pression légèrement supérieure à celle régnant à l'extérieur de ladite enceinte ;

– des moyens (26,126 ; 50,51,52) pour séparer la bande monocouche ou multicouches thermoplastique de sa bande de protection à son entrée dans l'enceinte stérile (13,113) ;

– des premiers moyens de transport pour déplacer ladite bande monocouche ou multicouches thermoplastique à récipients (2,102), de façon telle qu'elle forme au moins une partie de la paroi inférieure (16,116) de ladite enceinte stérile ;

– des seconds moyens de transport pour déplacer ladite nappe multicouches à couvercles (19,119) de façon telle qu'elle forme au moins une partie de la paroi supérieure (15,115) de ladite enceinte stérile (13,113) et pour l'amener jusqu'à l'extrémité aval de sortie de ladite enceinte stérile ;

– un poste de chauffage (21,121) servant à chauffer la bande thermoplastique à récipients (2,102) jusqu'à la température de thermoformage de celle-ci ;

– un poste de thermoformage (22,122) servant à thermoformer des récipients (11,111) dans la bande thermoplastique à récipients (2,102) et comprenant, en dessous de ladite bande, au moins un moule (28,128) susceptible de se déplacer verticalement entre une position haute de thermoformage et une position basse de démoulage, et, au-dessus de ladite bande, au moins un contre-moule (29,129) pénétrant partiellement de haut en bas de façon étanche dans ladite enceinte stérile (13,113) et présentant un poinçon de formage (30,130) verticalement mobile dans une chambre de contre-moule et susceptible de pénétrer dans la chambre de formage du moule (31,131) ;

– un poste de remplissage (23,123) des récipients (11,111) avec le produit (24,124), ce poste étant muni d'au moins une buse de distribution (32,132) pénétrant de haut en bas de façon étanche dans ladite enceinte stérile (13,113) et ouverte au-dessous du plan de transport de la bande thermoplastique (2,102) ;

– un poste d'obturation (25,125) destiné à recouvrir les récipients remplis avec la nappe multicouches à couvercles (19,119 ; 58,158) à l'extrémité aval de sortie de l'enceinte stérile (13,113), de sorte que les récipients quittent ladite enceinte stérile en étant recouverts de façon étanche par ladite nappe multicouches à couvercles ;

– ainsi qu'un poste de thermoscellement pour thermosceller la nappe multicouches à couvercles (19,119 ; 58,158) d'une façon étanche à l'air sur chacun des récipients (11,111) autour de son ouverture de remplissage ;

– tous les éléments du poste de thermoformage (22,122) à l'exception de la chambre du contre-moule (29,129) et du poinçon de formage (30,130) tous les éléments du poste de remplissage à l'exception de la buse de distribution (32,132) et tous les éléments du poste d'obturation (25,125) et du poste de thermoscellement étant disposés en dehors de ladite enceinte stérile (13,113), caractérisée en ce qu'elle comprend deux enceintes stériles (13,113) alignées et juxtaposées par leurs extrémités amont de telle sorte que ces dernières sont voisines et leurs extrémités aval sont éloignées l'une de l'autre, ces deux enceintes stériles communiquant entre elles par leurs extrémités amont juxtaposées, ainsi qu'un seul poste de stockage et de déroulement (35) d'une bobine de bande composite (36), disposé entre les extrémités amont des deux enceintes stériles juxtaposées (13,113), cette bande composite (1) présentant deux bandes multicouches ou monocouches thermoplastiques (2,102) qui sont d'une composition identique et dont l'une joue pour l'autre le rôle de la bande de protection et, par sa couche ou face interne stérile (8), adhère de façon étanche mais pelable par traction, à la couche ou face interne stérile (108) de l'autre bande thermoplastique, et que les moyens pour séparer la bande multicouches ou monocouche thermoplastique de sa bande de protection comportent pour les deux enceintes stériles juxtaposées (13,113) une seule paire de rouleaux ou de tambours de renvoi (26,126) d'axes parallèles à celui de ladite bobine (36) et disposée au-dessus dudit poste de stockage (35) entre les deux extrémités amont desdites enceintes stériles (13,113) de façon à délimiter entre ses deux rouleaux ou tambours de renvoi (26,126), l'entrée commune (18) de ces deux bandes multicouches ou monocouches (2,102) dans les deux enceintes stériles (13,113) et à assurer la séparation de celles-ci en deux bandes multicouches ou monocouches thermoplastiques à couche ou face interne stérile (8,108) et l'envoi de chacune de ces bandes thermoplastiques dans l'enceinte stérile correspondante.

10. Installation de conditionnement stérile d'un produit liquide et/ou pâteux dans des emballages stériles tels que des récipients thermoformés réalisés par emboutissage à chaud à partir d'une bande composite (1,45) présentant une bande multicouches ou monocouche thermoplastique dont la couche ou face dite interne destinée à délimiter l'intérieur de l'emballage tel que récipient est thermoscellable et stérile et est recouverte d'une bande de protection qui adhère de façon étanche mais pelable à la face stérile de ladite bande thermoplastique et dont la face adhérant à celle-ci est également stérile, récipients obturés après remplissage avec le produit par des couvercles thermoscellables réalisés à partir d'une nappe composite présentant une nappe multicouches à couvercles comportant au moins une couche en matière thermoplastique stérile dite couche intérieure thermoscellable sur le bord des récipients thermoformés et recouverte d'une nappe de protection qui par sa face intérieure stérile adhère de façon étanche mais pelable à la face stérile de ladite couche intérieure de ladite nappe multicouches, installation du type comprenant:

– au moins une enceinte stérile (13,113) présentant des parois verticales latérales (14,114) et des parois supérieure (15,115) et inférieure (16,116) ;

– des moyens (17,117) pour alimenter ladite enceinte avec un gaz stérile à une pression légèrement supérieure à celle régnant à l'extérieur de ladite enceinte ;

– des moyens (26,126 ; 59,51,52) pour séparer la bande monocouche ou multicouches thermoplastique (2,102) de sa bande de protection à son entrée dans l'enceinte stérile (13,113) ;

– des moyens (41,141 ; 61,62,63,162) pour séparer la nappe multicouches à couvercles (19,119 ; 58,158) de sa nappe de protection à son entrée dans l'enceinte stérile (13,113) ;

– des premiers moyens de transport pour déplacer ladite bande thermoplastique à récipients (2,102 ; 46,146), de façon telle qu'elle forme au moins une partie de la paroi inférieure (16,116) de ladite enceinte stérile (13,113) ;

– des seconds moyens de transport pour déplacer ladite nappe multicouches à couvercles (19,119 ; 58,158) de façon telle qu'elle forme au moins une partie de la paroi supérieure (15,115) de ladite enceinte stérile (13,113) et pour l'amener jusqu'à l'extrémité aval de sortie de ladite enceinte stérile ;

– un poste de chauffage servant à chauffer la bande thermoplastique à récipients (2,102) jusqu'à la température de thermoformage de celle-ci ;

– un poste de thermoformage (22,122) servant à thermoformer des récipients dans la bande thermoplastique à récipients (2,102) et comprenant, en dessous de ladite bande, au moins un moule (28,128) susceptible de se déplacer verticalement entre une position haute de thermoformage et une position basse de démoulage, et, au-dessus de ladite bande, au moins un contre-moule (29,129) pénétrant partiellement de haut en bas de façon étanche dans ladite enceinte stérile (13,113) et présentant un poinçon de formage (30,130) verticalement mobile dans une chambre de contre-moule et susceptible de pénétrer dans la chambre de formage (31,131) du moule ;

– un poste de remplissage (23,123) des récipients (11,111) avec le produit (24,124), ce poste étant muni d'au moins une buse de distribution (32,132) pénétrant de haut en bas de façon étanche dans ladite enceinte stérile (13,113) et ouverte au-dessous du plan de transport de la bande thermoplastique (2,102) ;

– un poste d'obturation (25,125) destiné à recouvrir les récipients remplis avec la nappe multicouches à couvercles (19,119 ; 58,158) à l'extrémité aval de sortie de l'enceinte stérile (13,113), de sorte que les récipients (11,111) quittent ladite enceinte stérile en étant recouverts de façon étanche par ladite nappe multicouches à couvercles ;

– ainsi qu'un poste de thermoscellement pour thermosceller la nappe multicouches à couvercles (19,119) d'une façon étanche à l'air sur chacun des récipients (11,111) autour de son ouverture de remplissage ;

– tous les éléments du poste de thermoformage (22,122) à l'exception de la chambre du contre-moule (29,129) et du poinçon de formage (30,130), tous les éléments du poste de remplissage (23,123) à l'exception de la buse de distribution (32,132) et tous les éléments du poste d'obturation (25,125) et du poste de thermoscellement étant disposés en dehors de ladite enceinte stérile (13,113), caractérisée en ce qu'elle comprend deux enceintes stériles (13,113) alignées et juxtaposées par leurs extrémités amont, de telle sorte que ces dernières sont voisines et leurs extrémités aval sont éloignées l'une de l'autre, ces deux enceintes stériles communiquant entre elles par leurs extrémités amont juxtaposées, ainsi qu'un seul poste de déroulement (38) d'une bobine de nappe composite (39), disposé au-dessus des extrémités amont des deux enceintes stériles juxtaposées (13,113), cette nappe composite (37) présentant deux nappes multicouches à couvercles (19,119) qui sont d'une composition identique et dont l'une joue pour l'autre le rôle de la nappe de protection et, par sa couche intérieure stérile, adhère de façon étanche mais pelable par traction, à la couche intérieure stérile de l'autre nappe multicouches à couvercles et que les moyens pour séparer la nappe multicouches à couvercles de sa nappe de protection comportant pour les deux enceintes stériles juxtaposées (13,113) une seule paire de rouleaux de renvoi (41,141) d'axes parallèles à celui de la bobine de déroulement (39) et disposée en dessous dudit poste de déroulement (38) et entre les deux extrémités amont desdites enceintes stériles (13,113) de façon à délimiter entre ses deux rouleaux de renvoi (41,141) l'entrée commune (42) de ces deux nappes multicouches (19,119) dans les deux enceintes stériles (13,113) et à assurer la séparation de celles-ci en deux nappes multicouches à couche intérieure stérile et l'envoi de chacune de ces nappes multicouches à couvercles dans l'enceinte stérile correspondante.

11. Installation de conditionnement stérile selon la revendication 10, caractérisée en ce qu'elle comprend, en outre un seul poste de stockage et de déroulement (35) d'une bobine (36) de bande composite (1), disposé entre les extrémités amont des deux enceintes stériles juxtaposées (13,113), cette bande composite (1) présentant deux bandes multicouches ou monocouches thermoplastiques (2,102) qui sont d'une composition identique et dont l'une joue pour l'autre le rôle de la bande de protection et, par sa couche ou face interne stérile (8,108), adhère de façon étanche mais pelable par traction, à la couche ou face interne stérile de l'autre bande thermoplastique, ce poste de stockage (35) de la bobine de bande composite (36) se trouvant également en dessous du poste de déroulement (38) de la bobine de nappe composite (39), que les moyens pour séparer la bande multicouches ou monocouches thermoplastique de sa bande de protection comportent pour les deux enceintes stériles juxtaposées (13,113) une seule paire de rouleaux ou de tambours de renvoi (26,126) d'axes parallèles à celui de ladite bobine (36) et disposée au-dessus dudit poste de stockage (35) entre les deux extrémités amont desdites enceintes stériles (13,113) de façon à délimiter entre ses deux rouleaux ou tambours de renvoi (26,126), l'entrée commune (18) de ces deux bandes multicouches ou monocouches (2,102) dans les deux enceintes stériles (13,113) et à assurer la séparation de celles-ci en deux bandes multicouches ou monocouches thermoplastiques à couche ou face interne stérile et l'envoi de chacune de ces bandes thermoplastiques dans l'enceinte stérile correspondante (13,113), et que la paire de rouleaux de renvoi (26,126) pour la séparation de la bande composite (1) en deux bandes multicouches ou monocouches (2,102) et l'entrée commune (18) de ces deux bandes multicouches ou monocouches dans les deux enceintes stériles (13,113) sont disposées en dessous et à l'aplomb de la paire de rouleaux de renvoi (41,141) pour la séparation de la nappe composite (37) en ces deux nappes multicouches (19,119) aussi bien qu'en dessous de l'entrée commune (42) de ces deux nappes multicouches dans lesdites deux enceintes stériles (13,113).

12. Installation de conditionnement stérile d'un produit liquide et/ou pâteux dans des emballages stériles tels que des récipients thermoformés réalisés par emboutissage à chaud à partir d'une composite (45) présentant une bande multicouches ou monocouche thermoplastique à récipients dont la face ou couche dite interne destinée à délimiter l'intérieur de l'emballage tel que récipient est thermoscellable et stérile et est recouverte d'une bande de protection qui adhère de façon étanche mais pelable à la face stérile de ladite bande thermoplastique et dont la face adhérant à celle-ci est également stérile, récipients obturés après remplissage avec le produit par des couvercles thermoscellables réalisés à partir d'une nappe multicouches à couvercles comportant au moins une couche en matière stérile dite couche intérieure thermoscellable sur le bord des récipients thermoformés, installation du type comprenant :

   – une enceinte stérile (113) présentant des parois verticales latérales (114) et des parois supérieure (115) et inférieure (116) ;

   – des moyens (117) pour alimenter ladite enceinte avec un gaz stérile à une pression légèrement supérieure à celle régnant à l'extérieur de ladite enceinte ;

   – des moyens (50,51,52) pour séparer la bande thermoplastique à récipients (46) de sa bande de protection (146) à son entrée dans l'enceinte stérile (113) ;

   – des premiers moyens de transport pour déplacer ladite bande thermoplastique à récipients (46) de façon telle qu'elle forme au moins une partie de la paroi inférieure (116) de ladite enceinte stérile (113) ;

– des seconds moyens de transport pour amener ladite nappe multicouches à couvercles (119 ; 58,158) jusqu'à l'extrémité aval de sortie de ladite enceinte stérile et, le cas échéant, pour déplacer ladite nappe multicouches de telle façon qu'elle forme au moins une partie de la paroi supérieure de ladite enceinte stérile (113) ;

– un poste de chauffage (121) servant à chauffer la bande thermoplastique à récipients (46) jusqu'à la température de thermoformage de celle-ci ;

– un poste de thermoformage (122) servant à thermoformer des récipients dans la bande thermoplastique à récipients (46) et comprenant en dessous de ladite bande, au moins un moule (128) susceptible de se déplacer verticalement entre une position haute de thermoformage et une position basse de démoulage, et au-dessus de ladite bande, au moins un contre-moule (129) pénétrant partiellement de haut en bas de façon étanche dans ladite enceinte stérile (113) et présentant un poinçon de formage (130) verticalement mobile dans une chambre du contre-moule (129) et susceptible de pénétrer dans la chambre de formage (131) du moule (128) ;

– un poste de remplissage (123) des récipients (111) avec le produit (124), ce poste étant muni d'au moins une buse de distribution (132) pénétrant de haut en bas de façon étanche dans ladite enceinte stérile (113) et ouverte au-dessus du plan de transport de ladite bande thermoplastique (46) ;

– un poste d'obturation (125) destiné à recouvrir les récipients remplis avec la nappe multicouches à couvercles (119 ; 58,158) à l'extrémité aval de sortie de l'enceinte stérile (113), de sorte que les récipients quittent ladite enceinte stérile en étant recouverts de façon étanche par ladite nappe multicouches à couvercles ;

– ainsi qu'un poste de thermoscellement pour thermosceller la nappe multicouches à couvercles (119 ; 58,158) d'une façon étanche à l'air sur chacun des récipients (111) autour de leur ouverture de remplissage ;

– tous les éléments du poste de thermoformage (122) à l'exception de la chambre du contre-moule (129) et du poinçon de formage (130), tous les éléments du poste de remplissage (123) à l'exception de la buse de distribution (132) et tous les éléments du poste d'obturation (125) et du poste de thermoscellement étant disposés en dehors de ladite enceinte stérile (113),

caractérisée en ce qu'elle comprend, en outre,

– en amont de l'enceinte stérile (113), un poste de stockage et de déroulement (43) pour une bobine de bande composite (44), cette bande composite (45) présentant, d'une part, deux bandes monocouches ou multicouches thermoplastiques à récipients (46,146) qui sont d'une composition identique et dont l'une joue pour l'autre le rôle de la bande de protection et, par sa face ou couche interne stérile, adhère de façon étanche mais pelable par traction, à la face ou couche interne stérile de l'autre bande monocouche ou multicouches thermoplastique et, d'autre part, une largeur supérieure (1) de un à plusieurs centimètres à la moitié (L/2) de la largeur (L) des deux bandes monocouches ou multicouches (46,146) juxtaposées et rabattues dans un plan (PP) qui est perpendiculaire au plan médian (PM) passant entre les deux bords longitudinaux jointifs (46a,146a) des deux bandes termoplastiques (46,146) et qui contient la face ou couche libre interne stérile de chacune desdites deux bandes thermoplastiques, et

– des moyens (49) pour maintenir serrées l'une contre l'autre les deux bandes à récipients (46,146) de la bande composite (45) le long de l'un des bords de celle-ci à partir d'un endroit situé en amont du poste de chauffage (121) jusqu'au moins en aval du poste de thermoscellement, et

– que les moyens pour séparer la bande thermoplastique à récipients (46) de sa bande de protection (146) comportent à l'opposé des moyens (49) pour maintenir serrées l'une contre l'autre les deux bandes monocouches ou multicouches (46,146) de la bande composite (45) le long de l'un des bords de celle-ci, et à l'entrée dans l'enceinte stérile, un coin d'écartement (50) et deux glissières de guidage (51,52) dont chacune guide de façon étanche à l'air extérieur celui des bords des deux bandes monocouches ou multicouches qui se trouve à l'opposé du bord de la bande composite à l'endroit duquel les bords superposés (46a,146a) des deux bandes monocouches ou multicouches (46,146) sont maintenus jointifs et serrés l'un contre l'autre,

– que ces deux glissières (51,52) presque jointives à la pointe amont du coin d'écartement (50) sont conformées de façon à s'écarter progressivement l'une de l'autre tout en gardant toujours la même distance par rapport aux bords jointifs (46a,146a) desdites bandes thermoplastiques (46,146), jusqu'à ce qu'elles joignent les parois verticales latérales (114) de l'enceinte stérile (113) et se trouvent à la distance maximale correspondant à la largeur maximale (L) desdites deux bandes (46,146) déployées dans un même plan (PP) perpendiculaire audit plan médian (PM) desdits bords jointifs (46a,146a), et

– que les deux glissières (51,52) sont reliées entre elles par une paroi bombée de couverture (53) recouvrant les faces ou couches internes stériles des deux bandes monocouches ou multicouches (46,146) à partir de l'endroit de séparation initiale de ces bandes jusqu'à leur jonction avec la paroi verticale correspondante (114) de l'enceinte stérile (113), ladite paroi de couverture (53) se raccordant à la paroi supérieure (115) de ladite enceinte.

13. Installation de conditionnement stérile d'un produit liquide et/ou pâteux dans des emballages stériles tels que des récipients thermoformés réalisés par emboutissage à chaud à partir d'une bande multicouches ou monocouche thermoplastique dite à récipients dont la couche ou face dite interne destinée à délimiter l'intérieur de l'emballage est thermoscellable et stérile et est recouverte d'une bande de protection qui adhère de façon étanche mais pelable à la face ou couche interne stérile et dont la face adhérant à cette dernière est également stérile, récipients obturés après remplissage avec le produit par des couvercles thermoscellables réalisés à partir d'une nappe multicouches à couvercles comprenant au moins une couche en matière stérile dite couche intérieure thermoscellable sur le bord des récipients thermoformés et recouverte, avant son utilisation, d'une nappe de protection qui par sa face intérieure stérile adhère de façon étanche mais pelable à la couche intérieure de ladite nappe multicouches, installation du type comprenant :

– une enceinte stérile (113) présentant des parois verticales latérales (114) et des parois supérieure (115) et inférieure (116) ;

– des moyens (117) pour alimenter ladite enceinte (113) avec un gaz stérile à une pression légèrement supérieure à celle régnant à l'extérieur de ladite enceinte ;

– des premiers moyens de séparation (26,126 ; 50,51,52) pour séparer la bande multicouches ou monocouche thermoplastique (102;46) de sa bande de protection (2,146) à son entrée dans l'enceinte stérile (113) ;

– des premiers moyens de transport pour déplacer ladite bande multicouches ou monocouche thermoplastique (102;46) de façon telle qu'elle forme au moins une partie de la paroi inférieure (116) de ladite enceinte stérile (113) ;

– des seconds moyens de séparation (61,62,63,162) pour séparer la nappe multicouches à couvercles (58) de sa nappe de protection (158), à son entrée dans l'enceinte stérile (113);

– des seconds moyens de transport pour amener ladite nappe multicouches à couvercles (58) jusqu'à l'extrémité aval de sortie de ladite enceinte stérile (113) et, le cas échéant, pour déplacer ladite nappe multicouches de telle façon qu'elle forme au moins une partie de la paroi supérieure (115) de ladite enceinte stérile (113),

– un poste de chauffage (121) servant à chauffer la bande multicouches ou monocouche thermoplastique (102,46) jusqu'à la température de thermoformage de celle-ci ;

– un poste de thermoformage (122) servant à thermoformer des récipients dans la bande multicouches ou monocouche thermoplastique (102,46) et comprenant en dessous de ladite bande, au moins un moule (128) susceptible de se déplacer verticalement entre une position haute de thermoformage et une position basse de démoulage, et, au-dessus de ladite bande, au moins un contre-moule (129) pénétrant partiellement de haut en bas de façon étanche dans ladite enceinte stérile (113) et présentant un poinçon de formage (130) verticalement mobile dans une chambre du contre-moule (129) et susceptible de pénétrer dans la chambre de formage (131) du moule (128) ;

– un poste de remplissage (123) des récipients (111) avec le produit (128), ce poste étant muni d'au moins une buse de distribution (132) pénétrant de haut en bas de façon étanche dans ladite enceinte stérile (113) et ouverte au-dessus du plan de transport de la bande multicouches ou monocouche thermoplastique (102,46) ;

– un poste d'obturation (125) destiné à recouvrir les récipients remplis avec la nappe multicouches à couvercles (58) à l'extrémité aval de sortie de l'enceinte stérile (113), de sorte que les récipients quittent ladite enceinte stérile en étant recouverts de façon étanche par ladite nappe multicouches à couvercles ;

– ainsi qu'un poste de thermoscellement pour thermosceller la nappe multicouches à couvercles (58) d'une façon étanche à l'air sur chacun des récipients (111) autour de leur ouverture de remplissage ;

– tous les éléments du poste de thermoformage (122) à l'exception de la chambre du contre-moule (129) et du poinçon de formage (130) tous les éléments du poste de remplissage (123) à l'exception de la buse de distribution (132) et tous les éléments du poste d'obturation (125) et du poste de thermoscellement étant disposés en dehors de ladite enceinte stérile (113),

caractérisée en ce qu'elle comprend, en outre,

– à l'extérieur de l'enceinte stérile (113), un poste de support et de déroulement (56) pour une bobine de nappe composite (57), cette nappe composite (55) présentant, d'une part, deux nappes multicouches à couvercles (58,158) qui sont d'une composition identique et dont l'une joue pour l'autre le rôle de la nappe de protection, et, par sa couche intérieure stérile (59,159), adhère de façon étanche mais pelable par traction, à la couche intérieure stérile de l'autre nappe multicouches, et, d'autre part, une largeur (I) supérieure de un à plusieurs centimètres à la moitié (L/2) de la largeur (L) des deux nappes multicouches juxtaposées (58,158) lorsque celles-ci sont rabattues dans un plan (PP) qui est perpendiculaire au plan médian (PM) passant entre les deux bords longitudinaux jointifs (58a,158a) des deux nappes multicouches (58,158) et qui contient les faces libres de la couche intérieure (59,159) de chacune desdites deux nappes multicouches, et

– des moyens pour maintenir serrées l'une contre l'autre les deux nappes multicouches de la nappe composite, le long de l'un des bords de celle-ci à partir d'un endroit situé en amont du poste d'obturation jusqu'au moins en aval du poste de thermoscellement, et

– que les seconds moyens de séparation comportent, à l'opposé des moyens pour maintenir serrées l'une contre l'autre les deux nappes multicouches (58,158) de la nappe composite (55) le long de l'un des bords de celle-ci, un coin d'écartement (61) et deux glissières de guidage dont chacune guide, de façon étanche à l'air extérieur, celui (62,162) des bords (58b,158b) des deux nappes multicouches à couvercles (58,158) qui se trouve à l'opposé des bords superposés jointifs (58a,158a) desdites deux nappes multicouches,

– que ces deux glissières (62,162) presque jointives à la pointe amont du coin d'écartement (61) sont conformées de façon à s'écarter progressivement l'une de l'autre tout en gardant toujours la même distance par rapport aux bords jointifs (58a,158a) desdites nappes multicouches (58,158), jusqu'à ce qu'elles joignent les parois latérales (114) de l'enceinte stérile (113) et se trouvent à la distance maximale correspondant à la largeur maximale (L) des deux nappes multicouches (58,158) déployées dans un même plan (PP) perpendiculaire audit plan médian (PM) desdits bords jointifs (58a,158a),

– que les deux glissières (62,162) sont reliées entre elles par une paroi bombée de protection (63) disposée de façon à faire face aux couches intérieures (59,159) des deux nappes multicouches (58,158) à partir de l'endroit de séparation initial de ces nappes multicouches jusqu'à la jonction desdites glissières (62,162) avec les parois latérales (114) de l'enceinte stérile (113), et

– que les deux nappes multicouches (58,158) sont guidées tout au moins à partir de l'endroit de leur écartement de telle sorte que leurs bords jointifs (58a,158a) restent toujours à l'extérieur de l'enceinte stérile (113) et que leurs couches intérieures stériles (59,159) forment au moins une partie de la paroi supérieure (115) de l'enceinte stérile (113) et viennent recouvrir les ouvertures des récipients (111) thermoformés dans ladite enceinte(113).

14. Installation de conditionnement stérile selon la revendication 13, caractérisée en ce qu'elle comprend, en outre,

– en amont de l'enceinte stérile (113), un poste de stockage et de déroulement (43) pour une bobine de bande composite (44), cette bande composite (45) présentant, d'une part, deux bandes monocouches ou multicouches thermoplastiques à récipients (46,146) qui sont d'une composition identique et dont l'une (46) joue pour l'autre le rôle de la bande de protection et, par sa face ou couche interne stérile (47), adhère de façon étanche mais pelable par traction, à la face ou couche (146) interne stérile (147) de l'autre bande thermoplastique (146) et, d'autre part, une largeur (I) supérieure de un à plusieurs centimètres à la moitié (L/2) de la largeur (L) des deux bandes monocouches ou multicouches juxtaposées (46,146) dont au moins une est rabattue dans un plan (PP) qui est perpendiculaire au plan médian (PM) passant entre les deux bords longitudinaux jointifs (46a,146a) des deux bandes à couvercles (46,146) et qui contient les faces libres stériles internes de chacune desdites deux bandes (46,146), et

– des moyens (49) pour maintenir serrées l'une contre l'autre les deux bandes à récipients (46,146) de la bande composite (45) le long de l'un (46a,146a) des bords de celle-ci à partir d'un endroit situé en amont du poste de chauffage (121) jusqu'au moins en aval du poste de thermoscellement, et

– que les moyens pour séparer la bande à récipients de sa bande de protection comportent à l'opposé des moyens (49) pour maintenir serrées l'une contre l'autre les deux bandes à couvercles (46,146) de la bande composite (45) le long de l'un des bords de celle-ci, un coin d'écartement (50) et deux glissières de guidage (51,52) qui guident chacune de façon étanche à l'air extérieur celui (46b,146b) des bords des deux bandes à récipients (46,146) qui se trouve à l'opposé du bord de la bande composite (45) à l'endroit duquel les bords superposés (46a,146a) desdites deux bandes à récipients (46,146) sont maintenus jointifs et serrés l'un contre l'autre,

– que ces deux glissières (51,52) presque jointives à la pointe amont du coin d'écartement (50) sont conformées de façon à s'écarter progressivement l'une de l'autre tout en gardant toujours la même distance par rapport aux bords jointifs (46a,146a) desdites bandes à récipients (46,146), au moins jusqu'à ce que les deux glissières (51,52) joignent les parois latérales (114) de l'enceinte stérile (113) et se trouvent à la distance maximale correspondant à la largeur maximale des deux bandes à récipients déployées dans un même plan perpendiculaire (PP) audit plan médian (PM) desdits bords jointifs (46a,146a), et

– que les deux glissières (51,52) sont reliées entre elles par une paroi bombée de couverture (53) disposée en face des faces ou couches internes des deux bandes à récipients (46,146) à partir de l'endroit de séparation initial de ces bandes jusqu'à leur entrée dans l'enceinte stérile (113) à laquelle ladite paroi bombée (53) se raccorde.

FIG.1

FIG.2

FIG.3

FIG.4

FIG.5

FIG.6

20

FIG.7